(19) European Patent Office

Office européen des brevets

(11) Publication number: **0 122 245**
A2

# EUROPEAN PATENT APPLICATION

(12)

(21) Application number: **84850105.2**

(22) Date of filing: **03.04.84**

(51) Int. Cl.³: **B 60 N 1/00**

---

(30) Priority: **08.04.83 SE 8301945**

(43) Date of publication of application: **17.10.84**
**Bulletin 84/42**

(84) Designated Contracting States: **AT BE CH DE FR GB IT
LI NL**

(71) Applicant: **AB Nordverk, Box 593, S-451 22 Uddevalla
(SE)**

(72) Inventor: **Östlund, Göte, Pl. 3135, S-440 90 Henan (SE)**

(74) Representative: **Roth, Ernst Adolf Michael et al,
GÖTEBORGS PATENTBYRA AB Box 5005,
S-402 21 Göteborg (SE)**

---

(54) **A chair, seat bench or the like for mass transport vehicles.**

㊗ A chair or seat bench which is particularly suited for mass transportation and comprising a frame (10) supporting a seat portion (11) and a backrest portion (12). In order to simplify the mounting and removal of the upholstery (20, 21) of the seat portion and backrest portion and in the same time avoiding that it may be untied by mischief, it is fixed and tightened between the front edge and back edge of the seat portion and between the lower edge and upper edge of the backrest portion respectively, the locking device (22, 24; 25) of which comprises flat rails to which the upholstery is fixed and which is locked up in grooves (16, 19, 26, 28) along the side edges. The back edge of the seat portion and the lower edge of the backrest portion are so arranged with respect to each other that the respective locking devices for the upholstery are inaccessible. In order to provide an exposal of the said locking devices, the seat portion (11) is displeaceable on the frame (10) in the direction away from the backrest portion (12) by means of releasing a blocking device (29).

# A CHAIR, SEAT BENCH OR THE LIKE FOR MASS TRANSPORT VEHICLES

The present invention relates to a chair, seat bench or the like which is particularly suited for mass transport vehicles and comprising a frame supporting a seat portion and a back rest portion provided with upholstery. Chairs and seat benches in buses, trams, underground trains etc., are unfortunately often exposed to vandalism, which generally results in that the upholstery of the seat portion and back rest portion is cut into pieces. Repairs and replacement of the upholstery of the damaged chairs and seat benches are therefore a big item of expenditure for the mass transportation company.

The object of the present invention is to provide a durable and constructively uncomplicated chair or seat bench of the kind which is previously described, the upholstery of which can rapidly and easily be replaced whenever is required, but it should be impossible to loosen by mischief. According to the invention this has been provided by the fact that the upholstery of the seat portion respectively the back rest portion are fixed and tightened between the front edge and the back edge of seat portion respectively the lower edge and upper edge of the backrest portion, at which the locking device for the upholstery comprises flat bars to which the upholstery is fixed and which is locked up in grooves along the said edges, at which the back edge of the seat portion and the lower edge of the back rest portion is so arranged with respect to each other that the respective locking devices for the upholstery are inaccessible, that the seat portion is displaceable on the frame in the direction away from the backrest portion for exposing said locking devices, and that the displacement of the seat portion is lockable by means of a blocking device.

## Description of drawings

The invention will be more fully described in the following with reference to the accompanying drawings which illustrate some embodiments.

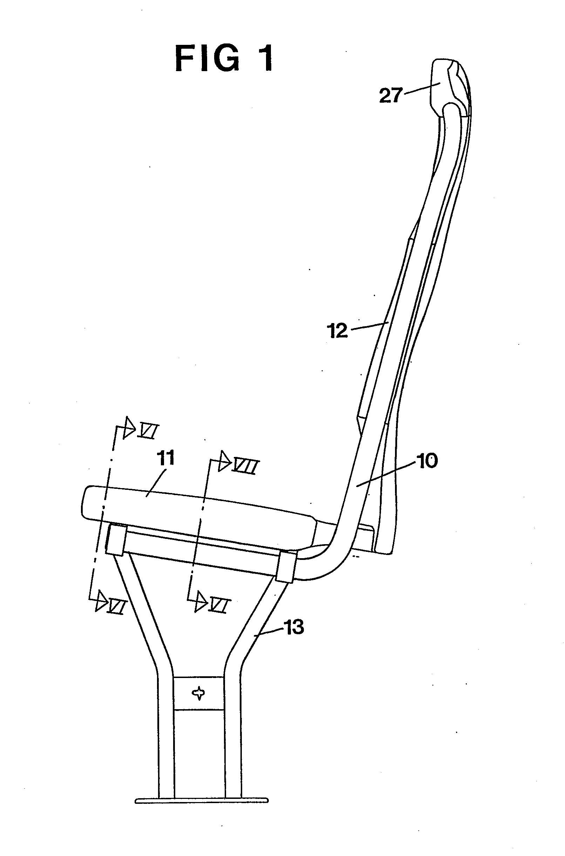

Fig. 1 is a side view of a chair according to the invention,

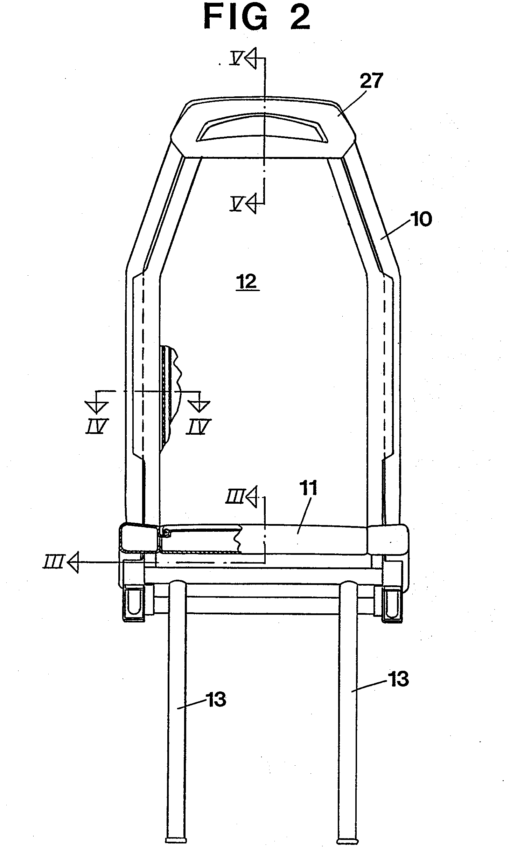

Fig. 2 is a partly broken front view of the chair according to Fig. 1.

Fig. 3 is a cross section according the line III-III in Fig. 2,

Fig. 4 is a cross section according the line IV-IV in Fig. 2,

Fig. 5 is a cross section according the line V-V in Fig. 2,

Fig. 6 is a cross section according the line VI-VI in Fig. 1,

Fig. 7 is a cross section according the line VII-VII in Fig.

Fig. 8 shows in perspective a special tool which is used whenever replacement of the upholstery is required.

Description of embodiments

The chair according the invention comprises a frame 10 in the form of a tubular stand which supports the seat portion 11 and the back rest portion 12 of the chair. The frame 10 is supported by a leg stand 13, which is anchored on the floor of the vehicle.

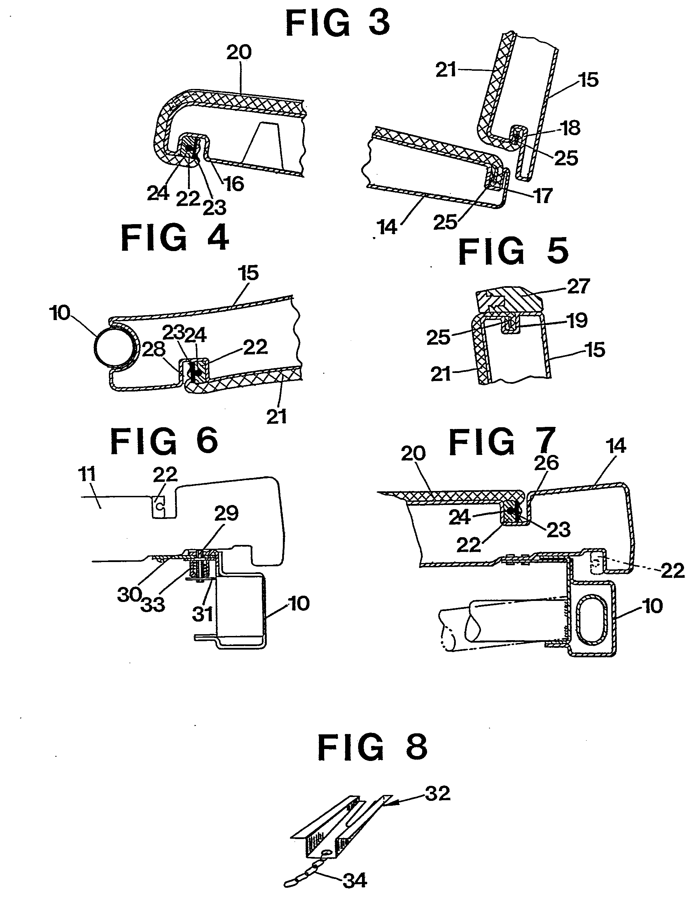

The seat portion 11 and back rest portion 12 consist of hollow shaper bodies 14 and 15 respectively of plastic material. Between the side edges on the shaper body 15 which provides the back rest portion 12 and the frame 10 is arranged a flock covering for sound and vibration-damping purposes (Fig. 4). The flock covering are glued to the shaper body 15. A corresponding flock covering is also arranged on the underside of the seat portion 11 between this and the frame 10 (fig. 7). Along the front edge and back edge of the shaper body 14 and along the lower edge and upper edge of the shaper body 15 is arranged grooves 16, 17 resp. 18, 19 for fastening of locking devices for the upholstery 20 and 21 of the seat portion and the backrest portion. The locking devices at the front edge of the seat portion 11 consists of a locking strip 22 (fig. 3), which is glued in the groove 16. In the locking strip 22 there is a longitudinal recess, in which a tongue 24 projecting from a flat rail 23 can be inserted from the side. The upholstery 20 of the seat portion 11 is fastened to the rail 23.

The locking device at the back edge of the seat portion 11 consists of a flat bar 25 to which the upholstery is fastened and which is pressed down into the groove 17. As the tractive force in the upholstery 20 is perpendicular with respect to the groove 17 the flat bar 25 a good fastening is obtained, as the flat bar 25 is tilted in the groove 17 and is more rigidly clamped.

The attachement of the long sides of the upholstery 20 to the seat portion 11 is done by means of the same type of rail 23 with projecting tongue 24 as at the front edge and which tongue 24 is pushed from the front and backwards along the seat portion 11 into recesses in locking strips, which are fixed in grooves 26 (Fig. 7) a little inside the long sides of the seat portion.

The upholstery 21 of the backrest portion is fixed on the corresponding way by means of flat bars 25 in the grooves 18 and 19 in the lower respectively upper edge of the backrest portion, which is disguised by a head rest portion 27 which is fixedly connected to the frame 10. On simpler chairs where a head rest portion is missing a horizontal tube extends from the frame 10 over the upper edge of the back rest portion. The attachment of the upholstery 21 along the long sides of the backrest portion is done in the same way as for the seat portion 11 by means of tongue-provided rails 23, which are inserted into recesses in locking strips 22 fixed in grooves 28 (fig. 4) along the backrest portion.

In the illustrated embodiment the upholstery does not extend all the way to the side edges of the seat portion and backrest portion, as the grooves 26, 28 are located a little inside these. It is of course possible to have the upholstery covering the whole front side of the seat portion and back rest portion and to extend around the side edges and to be fixed in locking strips 22 under and behind these respectively, as is indicated with the dash dotted lines in Fig. 7.

The backrest portion 12 is displaceable in the frame 10 as well as the seat portion 11, which can be pushed forward and owing to that make space for lowering the back rest portion. The flat bars 25 are disguised and are inaccessible between the back rest portion and the seat portion as well as between the backrest portion and the head rest portion. Displacement of the seat portion 11 in the frame 10 is blocked up by means of spring-loaded faucets 29 at the front edge of the seat portion (fig. 6), one on each side. The faucets 29 are fixedly connected to the seat portion 11 and extend in locking position through holes in the frame 10 in recesses 30. The faucets 29 are at the bottom provided with a collar 31. The faucets 29 can be brought out of locking position by means of the wedge-shaped inclined special tool 32 shown in fig. 8 and which is inserted between the collar 31 and the flange of the spring holder 33 and then against the action of the spring presses the faucet out of locking position.

Two tools 32 are appropriately connected by means of a chain 34 or the like and are at the same time inserted at both faucets 29, whereupon the seat portion 11 can be pushed forwards away from the backrest 12.

When mounting and replacing the upholstery, the seat portion must be pushed forwards, at which the flat bar 25 the back edge thereof becomes accessible and demounting of the upholstery can be made. When mounting a new upholstery, the tongue 24 of the rail 23 is first pushed in place in the locking strip 22 at the front edge of the seat portion and then along the side edges and finally the flat bar 25 is pressed down into the groove 17 at the back edge of the seat portion.

In the protruding position of the seat portion 11 there is space for lowering the back rest portion 12, at which the flat bars 25 at the upper edge thereof are exposed and replacing of the upholstery can be done.

- 5 -

Besides this simple demounting and mounting of the upholstery of the chair according to the invention, there is also the advantage that the upholstery cannot be untied by mischief, as for this purpose a special tool is required to expose the locking devices of the upholstery.

The invention is not limited to the illustrated embodiments but can be varied within the scope of the appended claims.

## C L A I M S

1. A chair, seat bench or the like which is particularly suited for mass transportation vehicles and comprising a frame supporting a seat portion and backrest portion provided with upholstery,
c h a r a c t e r i z e d   i n,
that the upholstery (20, 21) of the seat portion (11) respectively the backrest portion (12) is fixed and tightened between the front edge and back edge of the seat portion respectively the lower edge and upper edge of the backrest portion, at which the locking device for the upholstery comprises flat bars (23; 25) to which the upholstery is fixed and which is locked up in grooves (16, 19, 26, 28) along said edges,
that the back edge of the seat portion and the lower edge at the backrest portion is so arranged with respect to each other that the respective locking devices for the upholstery are inaccessible,
that the seat portion is displaceable on the frame (10) in the direction away from the backrest portion for exposing said locking devices, and
that the displacement of the seat portion is lockable by means of a blocking device (29).

2. A chair, seat bench or the like according to claim 1,
c h a r a c t e r i z e d   i n,
that the locking device at the upper edge of the backrest portion (12) is disguised by a part, for example a headrest portion (27), fixedly connected to the frame, and that the backrest portion is displaceable on the frame in the direction away from said part for exposing of said locking device.

3. A chair, seat bench or the like according to claim 1 or 2,
c h a r a c t e r i z e d   i n,
that the upholstery (20, 21) is fixed to the long sides of the seat portion (11) respectively backrest portion (12) by means of locking devices of the indicated kind.

# FIG 1

FIG 2

2/3

0122245

0122245

3/3

FIG 3

FIG 4

FIG 5

FIG 6

FIG 7

FIG 8